# EUROPÄISCHE PATENTSCHRIFT

(11) **EP 1 938 082 B1**
(45) Veröffentlichungstag und Bekanntmachung des Hinweises auf die Patenterteilung: **18.05.2011**
(21) Anmeldenummer: 06793682.3
(22) Anmeldetag: 20.09.2006
(51) Int. Cl.: G01N 15/06, G01N 30/12

(54) **VERFAHREN ZUR FEINSTAUBANALYSE**
METHOD FOR FINE DUST ANALYSIS
PROCEDE POUR ANALYSER DE LA POUSSIERE FINE

(30) Priorität: 19.10.2005 DE 102005050069
(43) Veröffentlichungstag der Anmeldung: 02.07.2008
(73) Patentinhaber: Forschungszentrum Jülich GmbH, 52425 Jülich (DE)
(72) Erfinder: BUERS, Hermann-Josef, 52428 Jülich (DE); KLEMP, Dieter, 52428 Jülich (DE); MÜLLER, Klaus-Peter, 52428 Jülich (DE); ROHRER, Franz, 52428 Jülich (DE)
(74) Vertreter: Gille Hrabal Struck Neidlein Prop Roos
(86) Internationale Anmeldenummer: PCT/EP2006/066553
(87) Internationale Veröffentlichungsnummer: WO 2007/045534

(56) Entgegenhaltungen:
- SUN JOO JEON ET AL: "Exploratory studies of PM10 receptor and source profiling by GC/MS and principal component analysis of temporally and spatially resolved ambient samples" J. AIR WASTE MANAGE. ASSOC.; JOURNAL OF THE AIR AND WASTE MANAGEMENT ASSOCIATION 2001, Bd. 51, Nr. 5, 2001, Seiten 766-784, XP008075060
- DALLAROSA ET AL: "Study of the profile of polycyclic aromatic hydrocarbons in atmospheric particles (PM10) using multivariate methods" ATMOSPHERIC ENVIRONMENT, PERGAMON, Bd. 39, Nr. 35, 12. September 2005 (2005-09-12), Seiten 6587-6596, XP005103808 ISSN: 1352-2310
- OCHSENKUHN-PETROPOULOU M ET AL: "On-line determination of polycyclic aromatic hydrocarbons in airborne particulate matter by using pyrolysis/GC-MS" J ANAL APPL PYROLYSIS; JOURNAL OF ANALYTICAL AND APPLIED PYROLYSIS OCTOBER 2003, Bd. 70, Nr. 1, Oktober 2003 (2003-10), Seiten 73-85, XP002420056
- COLLURA S ET AL: "Influence of the soluble organic fraction on the thermal behaviour, texture and surface chemistry of diesel exhaust soot" CARBON, Bd. 43, Nr. 3, 2005, Seiten 605-613, XP004694142 ISSN: 0008-6223
- SCHULZ H ET AL: "Volatile organic compounds and particulates as components of diesel engine exhaust gas" COMBUSTION AND FLAME, ELSEVIER SCIENCE PUBLISHING CO., INC., NEW YORK, NY, US, Bd. 118, Nr. 1-2, Juli 1999 (1999-07), Seiten 179-190, XP004282208 ISSN: 0010-2180
- HACKFORT H ET AL: "FUNDAMENTAL INVESTIGATIONS OF CONTINUOUS REGENERATION OF CARBON PARTICLE TRAPS WITH OXYGEN" SAE INTERNATIONAL FUELS AND LUBRICANTS MEETING AND EXHIBITION, Nr. 2984, 16. Oktober 2000 (2000-10-16), Seiten 1-6, XP001172591
- KUNEN STEVEN M. ET AL: 'CHEMICAL ANALYSIS OF THE INSOLUBLE CARBONACEOUS COMPONENTS OF ATMOSPHERIC PARTICULATES WITH PYROLYSIS/GAS CHROMATOGRAPHY/MASS SPECTROMETRY TECHNIQUES' PROC. AIR POLLUT. CONTROL ASSOC. 70TH ANNU. MEET. 1977, XP008075154
- SCHAUER J.J. ET AL: 'Source Apportionment if Airborne Particulate Matter using Organic Compounds as Tracers' ATMOSPHERIC ENVIRONMENT Bd. 30, Nr. 22, 1996, Seiten 3837 - 3855, XP007905843

## Beschreibung

Die Erfindung betrifft ein Verfahren für eine Analyse von Feinstaub.

Feinstaub ist die Gesamtbezeichnung für sehr kleine Staubteilchen. Die winzigen Teilchen des Feinstaubs messen weniger als zehn Mikrometer. Feinstaub ist eine hochkomplexe Mischung aus mehreren Tausenden von chemischen Verbindungen. Dazu gehören etwa Metalle, Salze, Schwefelverbindungen, Kohlenstoffe. Die Zusammensetzung des Feinstaubs kann je nach Zeit und Ort extrem variieren. Feinstaub verändert sich im Laufe der Zeit. Ein Teilchen bleibt nicht so, wie es etwa den Auspuff eines Dieselfahrzeugs verlässt, sondern es ist einem dynamischen Prozess unterworfen: Es kann mit anderen Stoffen, etwa dem Ozon in der Luft, reagieren und es altert. Feinstaub entsteht aus ganz unterschiedlichen Quellen, teils natürlicher Herkunft, teils vom Menschen verursacht.

Weil die Staubteilchen von Feinstaub so klein sind, können die ultrafeinen Partikel des Feinstaubs die Barriere zwischen Lunge und Blutkreislauf überwinden. Über das Blut werden sie zu sämtlichen Organen transportiert, beispielsweise ins Herz, wo sie Rhythmusstörungen verursachen können. Auch im Haushalt gibt es Feinstaub, der von Tabakqualm, Staubsauger, Toner von Kopierern und Druckern herrührt.

Aus dem Stand der Technik sind Verfahren zur Feinstaubanalyse bekannt, bei denen die in einer Feinstaubprobe enthaltenen organischen Verbindungen durch Extraktion (Schauer et al. in Atmospheric Environment, Bd. 30 (1996) S. 387-3855) oder thermische Desorption (Jeon et al. in J. Air & Waste Management Association, Bd. 51 (2001), S. 766-784) in die Gasphase überführt, gaschromatographisch aufgetrennt, und dann massenspektroskopisch identifiziert werden. Mithilfe multivariater Verfahren wird die so erhaltene Zusammensetzung mit der Zusammensetzung des Feinstaubs aus verschiedenen Quellen verglichen, um die Anteile dieser Quellen am Feinstaub der Probe zu quantifizieren.

Es ist Aufgabe der Erfindung, die Analysemöglichkeiten von Feinstaub weiterzuentwickeln.

Feinstaub aus Verbrennungsprozessen kann Spuren von organischem Material entweder direkt aus dem Brennstoff oder aus Verbrennungsprodukten enthalten. Dieses organische Material wird verfahrensgemäß zur Identifizierung und/ oder zur Quantifizierung der Feinstaubquelle genutzt.

Ruß von verschiedenen mit Diesel betriebenen Kraftfahrzeugen wird in einem Ofen in Luft oder reinem Sauerstoff einige Minuten lang auf 200°C erhitzt.

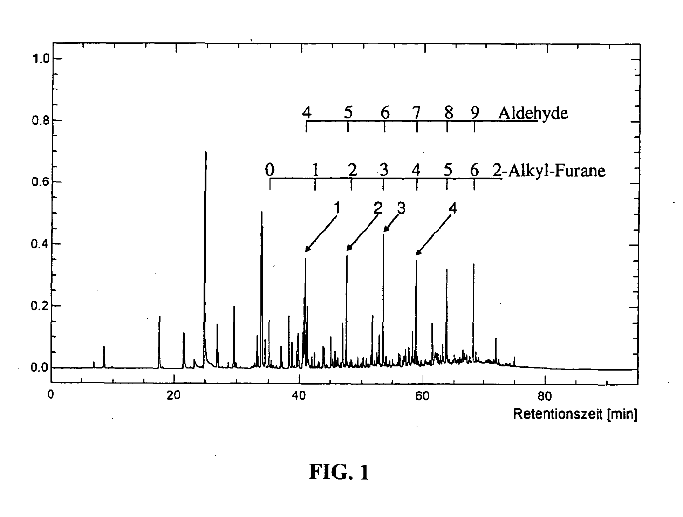

Der Sauerstoff setzt Teile des auf dem Dieselruß befindlichen organischen Materials reproduzierbar in eine Reihe von einfachen Aldehyden (Butanal bis Decanal) und Furanen (Furan, 2-Methyl-Furan bis 2-Butyl-Furan) um, die in die Gasphase übergehen. Mit einem speziell darauf angepassten Gaschromatographen (GC) mit Flammenionisationsdetektor (FID) oder Massenspektrographischer Detektor (MSD) wird dann die Gasphase analysiert. Die Aldehyde und Furane bei Dieselruß aus Kraftfahrzeugen ergeben eine reproduzierbare Signatur, die in Figur 1 gezeigt wird. Mit ausreichender Präzision erlaubt diese Signatur einen Rückschluss auf die Dieselrußmasse. Die Signale 1 bis 4 dienen zur Identifizierung und Quantifizierung des Dieselrußes.

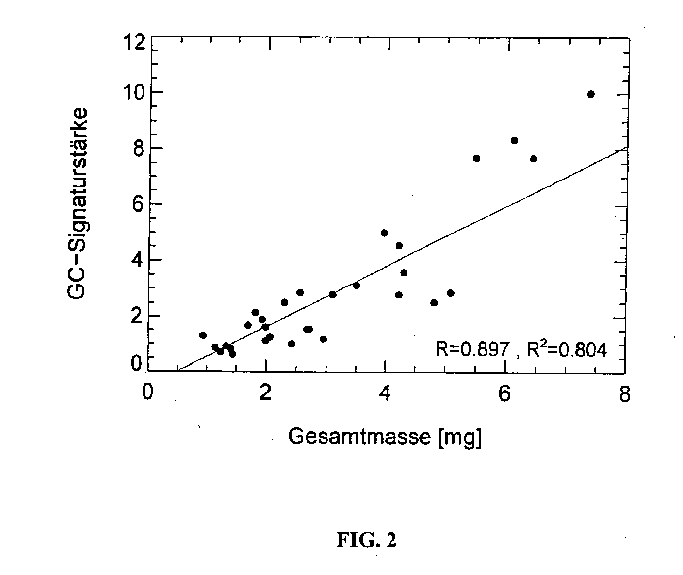

Um eine gesuchte von Dieselfahrzeugen erzeugte Masse an Ruß anhand der so ermittelten Signatur bestimmen zu können, werden Eichmessungen durchgeführt. Den Zusammenhang zwischen Rußmassen und Signaturstärken von 30 Dieselruß - Proben aus Kraftfahrzeugen unterschiedlicher Bauart wird in Figur 2 gezeigt. R ist der Korrelationskoeffizient und beträgt 0,897. R² ist das Quadrat des Korrelationskoeffizienten. R² = 0,804 bedeutet, dass 80,4% der Variabilität der beiden verglichenen Größen Rußmasse und Signaturstärke in beiden gemeinsam vorhanden ist. Mit Hilfe einer solchen Eichkurve wird anhand einer ermittelten Signatur die Masse an Ruß bestimmt.

Um nun beispielsweise festzustellen, wie stark mit Diesel betriebene Fahrzeuge zur Feinstaubbelastung beitragen, wird zunächst der Außenluft eine Feinstaubprobe entnommen und die Gesamtmasse an Feinstaub bestimmt, mit der die Luft belastet ist. Anschließend wird gemäß dem beschriebenen Verfahren die Masse an Ruß ermittelt, die durch mit Diesel betriebene Kraftfahrzeuge zum Feinstaub beigetragen haben. So wird absolut und relativ die Masse an Feinstaub ermittelt, die von mit Diesel betriebenen Kraftfahrzeugen stammt.

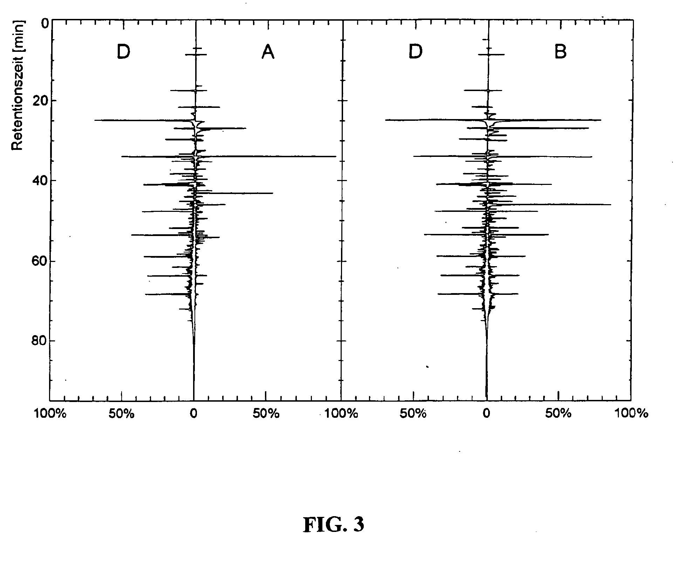

Andere Rußquellen wie Ölheizung, Elektrodenabbrand oder Reifenabrieb ergeben völlig anders ausgeprägte chromatographische Signaturen und stören diesen Nachweis nicht. Werden also Feinstaubproben aus Außenluftmessungen verwendet, kann die Dieselrußsignatur eindeutig bei entsprechender Belastungssituation identifiziert werden, wie anhand der in Figur 3 gezeigten Signaturen verifiziert wurde.

Figur 3 zeigt zwei Feinstaubproben, die der Außenluft entnommen wurden. Zum einen wird die Signatur "A" einer Probe aus einem Waldstück des Forschungszentrums Jülich im linken Diagramm gezeigt. Zum anderen wird die Signatur "B" einer Probe bei der Großen Rurstraße im rechten Diagramm gezeigt. Die Große Rurstraße gehört zu den Straßen von Jülich mit dem höchsten Verkehrsaufkommen. Das Waldstück ist naturgemäß nicht unmittelbar vom Kraftfahrzeugverkehr betroffen. Im jeweiligen Diagram wird nun eine Signatur "D" gegenübergestellt, die aus Signaturen von zwölf mit Diesel betriebenen Kraftfahrzeugen gemittelt worden ist. Die Signatur, die dem Feinstaub aus dem Waldstück zuzuordnen ist, enthält offensichtlich nur geringe Anteile an Dieselruß, Anders verhält es sich erwartungsgemäß bei der Großen Rurstraße. Der Vergleich der Signatur "D" mit der Signatur "B" verdeutlicht den hohen Anteil an Ruß von mit Diesel betriebenen Fahrzeugen, der zum Feinstaub beiträgt. Die Feinstaubkonzentration im Wald betrug 1 7 µg/m³. Die Feinstaubkonzentration an der Großen Rurstraße betrug 90 µg/m³.

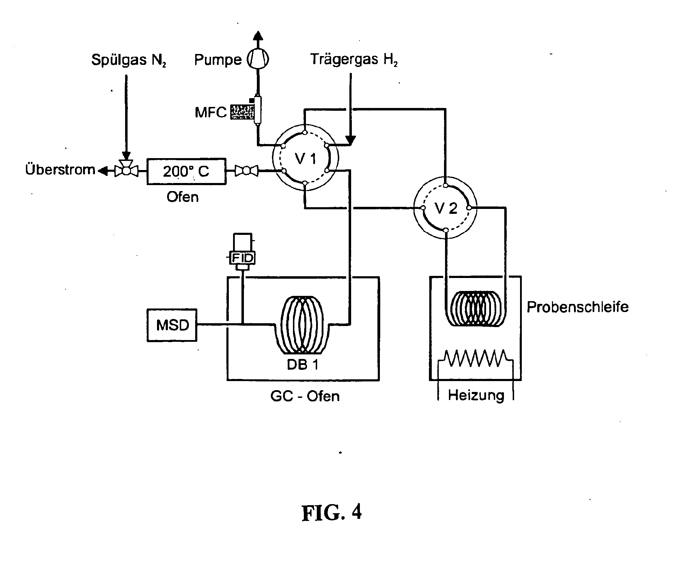

Da die Signatursubstanzen erst im Augenblick der Analyse aus hochmolekularen Vorläufern auf dem Dieselruß erzeugt werden, konnte gezeigt werden, dass Feinstaubproben auch nach einer Woche Lagerungszeit noch ein unverändertes Ergebnis lieferten. Wahrscheinlich kann von einer noch weit längeren Lagerungsfähigkeit der Proben ausgegangen werden. C₂ - C₁₃-Kohlenwasserstoffe können mit Hilfe eines Gaschromatographen (HP 6890) mit Flammenionisationsdetektor (FID) und einer kryogenen Anreicherungseinheit nachgewiesen und gemessen werden. Eine derartige kryogene Anreicherungseinheit ist bekannt aus Klemp et al., Atmospheric Enviroment 36, Supplement 1 , Seite 61-80, 2002. Figur 4 zeigt ein Flussschema des verwendeten Gaschromatographiesystems.

Der Feinstaub wird sowohl bei den Fahrzeuguntersuchungen als auch bei den Außenluftmessungen auf einem geeigneten Filter aus Quarzfasern gesammelt. Dieser Quarzfilter wird in ein heizbares Rohr beispielsweise bestehend aus Edelstahl eingebracht und in Luft oder Sauerstoff verschlossen. Die von der Feinstaubprobe durch Erhitzung oder Reaktion mit Sauerstoff bei 200°C in die Gasphase überführten Kohlenwasserstoffe werden für 10 min in einem Stickstoffstrom von 80 ml/min in einer mit flüssigem Stickstoff gekühlten und mit Glasperlen (Durchmesser 0,25 mm) gefüllten Sammelschleife (Silco-steel®, 20 cm Länge, 2 mm Durchmesser) aufkonzentriert. Anschließend wird die Sammelschleife bis zum Beginn der Probenaufgabe verschlossen. Zu diesem Zweck wird die Schleife auf 1 30 °C geheizt und die Kohlenwasserstoffe auf die Kapillarsäule (DB-1, 120 m x 0,32 mm Durchmesser, 3 µm Filmdicke) injiziert. Nach der Injektion wird die Säule zunächst für 5 min isotherm bei - 60 °C betrieben und dann mit einer Rate von 4 °/min bis auf 180 °C aufgeheizt, Anschließend wird die Säule für 1 2 min bei 220 °C ausgeheizt. Am Ende der Analyse wird der Gaschromatograph (GC) wieder auf die Starttemperatur von -60 °C abgekühlt und eine neue gaschromatographische Analyse gestartet.

Um nun beispielsweise andere Feinstaubquellen ermitteln und quantifizieren zu können, ist analog vorzugehen. Es ist also eine charakteristische Signatur erst zu ermitteln und eine Eichkurve aufzunehmen, welcher der Zusammenhang zwischen der Stärke einer Signatur und der Masse zu entnehmen ist. Mit diesen Daten kann dann einer realen Signatur entnommen werden, ob und mit welchem Anteil diese andere Feinstaubquelle zur Feinstaubbelastung beiträgt.

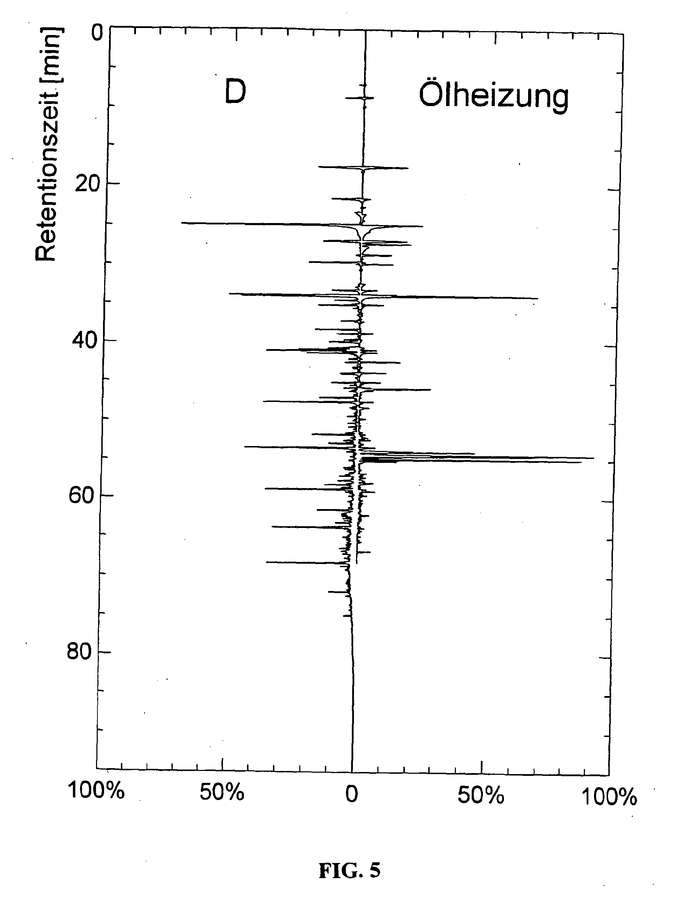

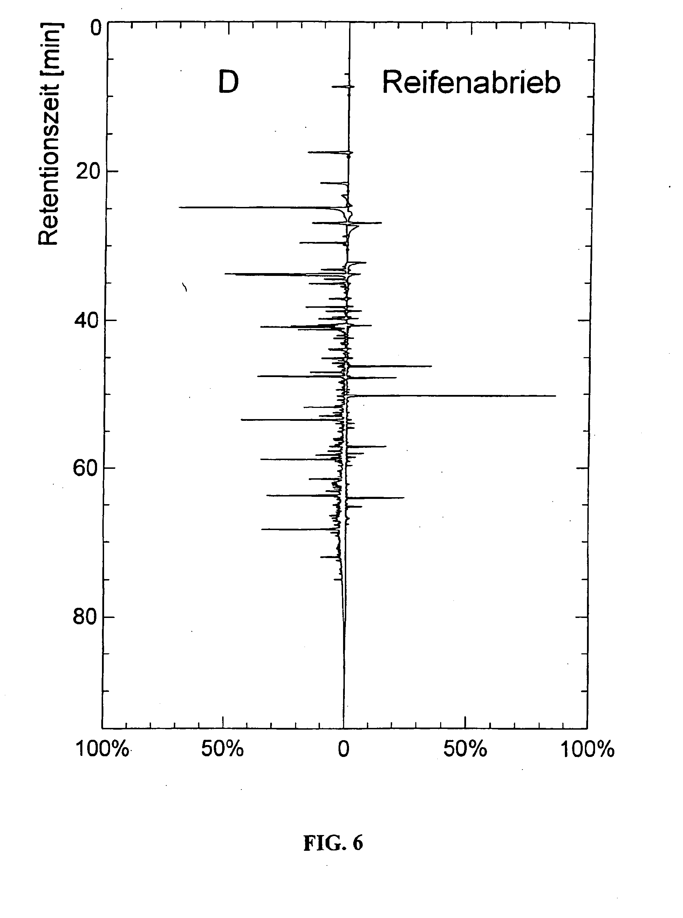

Die Figuren 5 und 6 zeigen auf der rechten Seite Signaturen für den aus einer Ölheizung stammenden Feinstaub sowie für Feinstaub, der von Reifenabrieb stammt. Auf der linken Seite wird zum Vergleich die charakteristische Signatur D aus mit Diesel betriebenen Kraftfahrzeugen dargestellt. Der Vergleich verdeutlicht, dass die verschiedenen Quellen zu deutlich verschiedenen Signaturen führen. Es können daher die diversen Quellen von Feinstaub anhand charakteristischer Signaturen sowohl quantitativ als auch qualitativ bestimmt werden.

Eine Ausführungsform des erfindungsgemäßen Verfahrens zur Dieselsignaturbestimmung in Feinstaub ist geeignet, die von Dieselfahrzeugen mit Partikelfilter freigesetzte organische Masse zu quantifizieren. Die derzeit bei Dieselfahrzeugen verwendeten Partikelfilter halten in einem ersten Schritt in der so genannten Sammelphase die Rußpartikel auf einem keramischen Filtermaterial zurück. In einem zweiten Schritt, der Reinigungsphase, wird bei Bedarf die Temperatur des Filtermaterials durch Einspritzen zusätzlichen Treibstoffs auf etwa 500-600°C erhöht und die angesammelten Rußpartikel verbrannt. In der Sammelphase befindet sich das Trägermaterial des Partikelfilters auf normaler Abgastemperatur von etwa 200-300°C. Diese Temperatur reicht nicht aus, um den elementaren Kohlenstoff in den Rußpartikeln zu verbrennen. Allerdings reicht diese Temperatur aus, um die den Rußpartikeln anhaftende organische Phase in die Gasphase zu überführen. Auf diese Weise werden die Kohlenwasserstoffanhaftungen des Dieselrußes mit dem heißen Abgasstrom durch den Partikelfilter hindurchgeschleust. Dieses von Dieselfahrzeugen mit Partikelfilter emittierte organische Material enthält wahrscheinlich auch die karzinogenen Substanzen (insbesondere polyzyklische Aromaten), die vorher fest an dem Dieselruß anhafteten. Gesundheitliche Folgewirkungen infolge Freisetzung dieser Substanzen sind durchaus denkbar.

Das von Dieselfahrzeugen mit Partikelfilter freigesetzte organische Material kann am Auspuff durch den Einsatz eines Quarzfilters aufgesammelt und einer Signaturanalyse unterzogen werden, wie dies für normale Dieselautos in diesem Verfahren beschrieben wurde. Dies kann besonders effizient durchgeführt werden, falls sich bei der Abkühlung des Abgasstromes im Verlauf des Auspuffrohres nach dem Partikelfilter aus den gasförmig freigesetzten Kohlenwasserstoffen neue Partikel bilden. Diese erneute Partikelbildung und damit die Sammeleffizienz auf dem Quarzfilter ist deswegen stark von den genauen Bedingungen bei der Probennahme abhängig. Bei geeigneter Probennahme unter Zuhilfenahme eines vorgeschalteten zusätzlichen Probevolumens, das die Kondensation der neuen Partikel begünstigt, beträgt die gesammelte Partikelmasse unter den gefundenen Untersuchungsbedingungen zwischen 10 und 40 % der von Dieselfahrzeugen ohne Partikelfilter emittierten Partikelmasse. Die auf dem Quarzfilter hinter einem mit Diesel betriebenen Fahrzeug mit Partikelfilter aufgesammelten Partikel (oder die dort abgeschiedene Gasphase) unterscheiden sich in einer Hinsicht ganz erheblich von den Partikeln eines normalen Dieselautos: Die Partikel sind nicht schwarz gefärbt sondern farblos, da sie keinen elementaren Kohlenstoff mehr enthalten. Die Erfinder bezeichnen diese Partikel daher als weißen Ruß. Sie fallen deswegen auf dem weißen Quarzfilter optisch nicht auf, obwohl dessen Masse zugenommen hat.

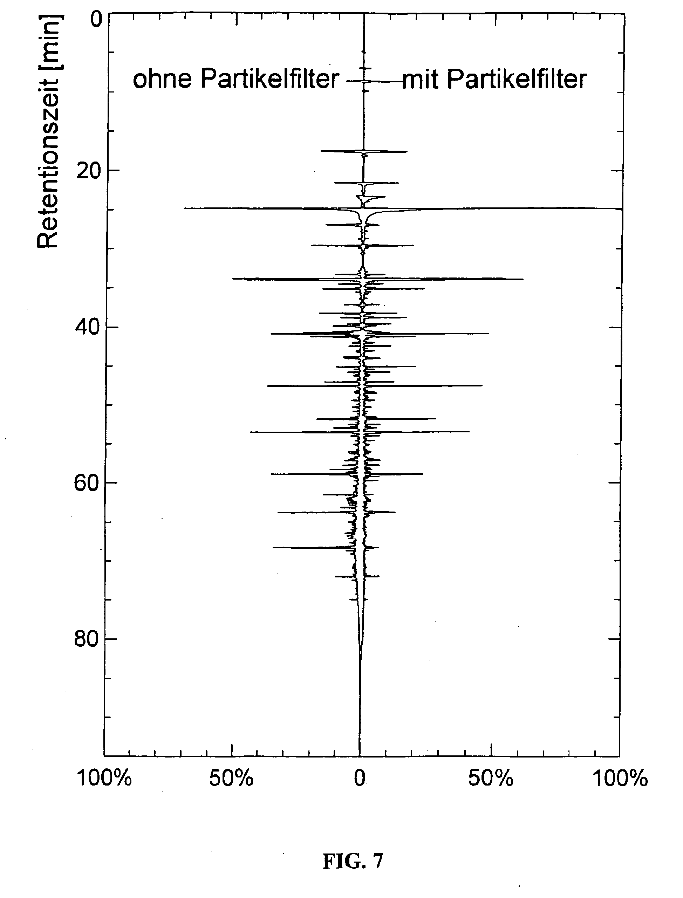

Im Abgasstrom von Dieselfahrzeugen mit Partikelfilter wurde mithilfe der oben beschriebenen Analysemethode die gleichartige Abfolge von Signatursubstanzen gefunden wie bei Dieselfahrzeugen ohne Partikelfilter, wenn ein Teilstrom des Abgases durch einen Quarzfilter gesaugt wurde. Dies ist der Figur 7 zu entnehmen, die einen Vergleich zwischen der Signatur eines Diesel-Fahrzeuges mit und ohne Partikelfilter zeigt.

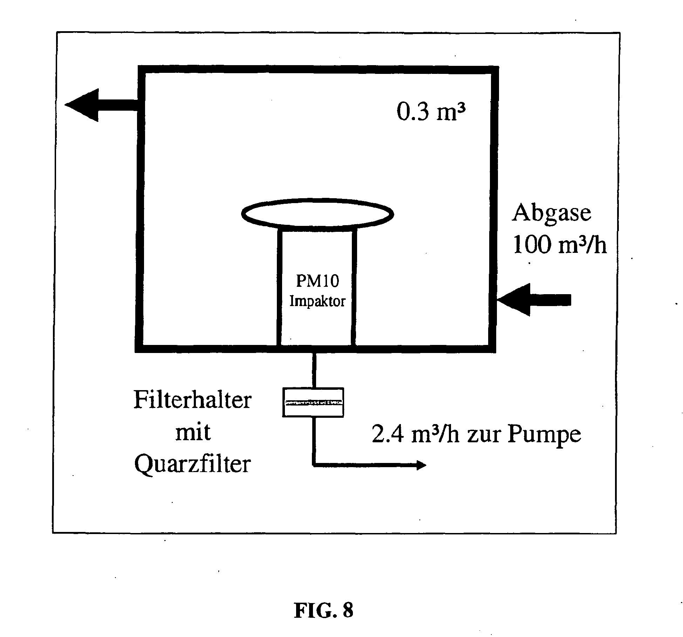

Da wie beschrieben die Sammeleffizienz der organischen Phase auf einem Quarzfilter stark von den herrschenden Bedingungen abhängt (hohe Temperaturen und/oder nachhaltige Verdünnung des Dieselabgases vermindern das Kondensationsverhalten der organischen Phase), wurde eine Sammelmethode entwickelt, die die Bestimmung der organischen Phase im Abgas von Dieselfahrzeugen mit Partikelfilter unter günstigen Bedingungen erlaubt: Das Abgas wird mithilfe eines am Ende des Auspuffs befestigten hitzeresistenten Schlauches großen Durchmessers in ein Metallgefäß geleitet. Volumen und Wärmeleitfähigkeit des Metallgefäßes (Volumen: 300 I, Material: Aluminium) sind so gewählt, dass auch unter maximalen Drehzahlbedingungen eine weitgehende Kondensation der organischen Phase gewährleistet ist. Die Sammlung der organischen Phase erfolgt mithilfe eines PM10-Sammelkopfes im Inneren des Metallgefäßes. Figur 8 zeigt den Aufbau des Vorschaltvolumens zur Messung der Emissionen organischer Materie bei Dieselfahrzeugen mit Partikelfilter.

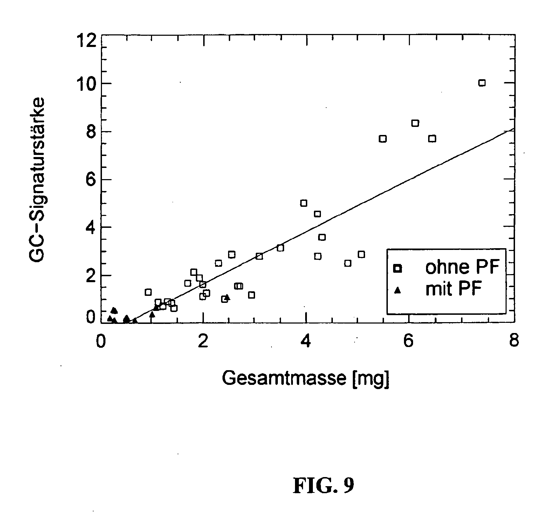

Für eine Anzahl von Dieselfahrzeugen mit Partikelfilter wurde unter den oben aufgeführten Bedingungen eine ähnliche Beziehung zwischen Dieselsignaturstärke und aufgesammelter Masse auf dem Quarzfilter gefunden. Figur 9 zeigt eine Auftragung der Rußmasse gegen Signaturstärke für Diesel-Fahrzeuge mit und ohne Partikelfilter (PF).

Aufgrund der außerordentlichen Empfindlichkeit des entwickelten Signatur-Nachweisverfahrens ist deswegen eine sehr empfindliche Bestimmungen der optisch nicht auffälligen emittierten organischen Materie von - Dieselfahrzeugen mit Partikelfilter möglich. Damit kann zum Beispiel auch untersucht werden, ob andere/neuere Konzepte für Partikelfilter ähnliche Probleme bei der Rückhaltung der gesundheitsschädlichen organischen Phase von Dieselruß haben. Das Verfahren eignet sich also für die Überprüfung und Klassifizierung der Wirksamkeit von Filtern und zwar insbesondere von Partikelfiltern für Kraftfahrzeuge.

## Patentansprüche

1. Verfahren zur Analyse von Feinstaub, bei dem organisches Material, die der Feinstaub enthält, zur Identifizierung und/ oder Quantifizierung der Feinstaubquelle genutzt wird, wobei wenigstens eine chromatografische Signatur einer Feinstaubquelle ermittelt wird und durch Vergleich der chromatografischen Signatur dieser Feinstaubquelle mit der chromatografischen Signatur des zu analysierenden Feinstaubs diese Feinstaubquelle identifiziert und/ oder quantifiziert wird, wobei die chromatografischen Signaturen durch Erhitzen des Feinstaubs mit Luft oder Sauerstoff und anschließende Analyse des Gasphase in einem Gaschromatographen erhalten werden.

2. Verfahren nach Anspruch 1, bei dem aus Verbrennungsprodukten stammender Feinstaub analysiert wird und zwar insbesondere Ruß aus einem Kraftfahrzeug mit Dieselmotor.

3. Verfahren nach einem der vorhergehenden Ansprüche, bei dem die Masse an Feinstaub einer Feinstaubquelle mit Hilfe einer Eichkurve bestimmt wird.

4. Verfahren nach einem der vorhergehenden Ansprüche, wobei die Wirksamkeit eines Filters ermittelt und / oder klassifiziert wird und zwar insbesondere eines Partikelfilters für Kraftfahrzeuge.

## Claims

1. A process for analyzing of particulate matter, wherein organic material containing particulate matter is utilized for identification and/or quantification of the particulate matter source wherein at least one chromatographic signature of a particulate matter source is determined and is identified and/or quantified by comparing the chromatographic signature of this particulate matter source with the chromatographic signature of the particulate matter to be analyzed, wherein the chromatographic signatures will be obtained by heating of particulate matter with air or oxygen followed by analyzing of the gas phase in a gas chromatograph.

2. A process according to claim 1, wherein particulate matter derived from combustion products, especially carbon black derived from a motor vehicle having a diesel engine is analyzed.

3. The process according to one of the preceding claims, wherein the mass of particulate matter of a particulate matter source is determined by means of a calibration curve.

4. The process according to one of the preceding claims, wherein efficiency of a filter, especially a particulate filter for motor vehicles, is determined and/or classified.

## Revendications

1. Procédé pour l'analyse de particules fines, dans lequel de la matière organique contenant de particules fines est utilisée pour l'identification et/ou pour la quantification de l'origine des particules fines, au moins une signature chromatographique d'un origine des particules fines étant déterminée et est identifiée et/ou quantifiée par comparaison la signature chromatographique dudit origine des particules fines avec la signature chromatographique des particules fines à être analysées dudit origine des particules fines, dans lequel les signatures chromatographiques seront obtenues par le chauffage des particules fines avec de l'air ou de l'oxygène et ensuite l'analyse de la phase gazeuse dans un chromatographe de gaz.

2. Procédé selon la revendication 1, dans lequel des particules fines dérivées des produits de combustion sont analysées, et particulièrement le noir de carbone dérivé d'une automobile à moteur Diesel.

3. Procédé selon la revendication 1, dans lequel la masse des particules fines d'une source de particules fines est déterminée par une courbe d'étalonnage.

4. Procédé selon l'une des revendications précédentes, dans lequel l'efficacité d'un filtre, et particulièrement celle-ci d'un filtre à particules fines pour des automobiles, est déterminée et/ou est classifiée
